# EUROPÄISCHE PATENTSCHRIFT

(11) **EP 0 566 035 B1**
(45) Veröffentlichungstag und Bekanntmachung des Hinweises auf die Patenterteilung: **19.04.1995**
(21) Anmeldenummer: 93105842.4
(22) Anmeldetag: 08.04.1993
(51) Int. Cl.: B01D 17/028, B01D 17/04

(54) **Vorrichtung zum Trennen von dispersen Flüssig-Flüssig- und Flüssig-Fest-Stoffsystemen**
Device for separating dispers liquid-liquid and liquid-solid systems
Dispositif pour séparer des systèmes dispersés liquide-liquide et liquide-solide

(30) Priorität: 14.04.1992 DE 4212449
(43) Veröffentlichungstag der Anmeldung: 20.10.1993
(73) Patentinhaber: Dyckerhoff & Widmann Aktiengesellschaft, D-81902 München (DE)
(72) Erfinder:
(74) Vertreter: Patentanwälte Möll und Bitterich

(56) Entgegenhaltungen:
- DE-A- 3 824 295
- DE-B- 1 169 895
- US-A- 1 758 743
- US-A- 3 152 196
- US-A- 3 957 656

## Beschreibung

Die Erfindung betrifft eine Vorrichtung zum Trennen von dispersen Flüssig-Flüssig- und Flüssig-Fest-Stoffsystemen gemäß dem Oberbegriff des Patentanspruchs 1.

Zum Abscheiden suspendierter sinkfähiger Feststoffe und/oder von leichten Tröpfchen aus einer Flüssigkeit, zumeist Wasser, durch Absinken bzw. Koaleszenz der dispergierten Phasen sind sogenannte Koaleszenzabscheider bekannt. Koaleszenzabscheider sind Behälter, in denen die Flüssigkeit Barrieren durchströmt, in denen die dispergierten Phasen Gelegenheit zur Abscheidung erhalten.

Eine bekannte Vorrichtung der eingangs angegebenen Art umfaßt mindestens eine Barriere aus mehreren, zu einem Plattenstapel zusammengepackten Lamellenplatten aus abwechselnd in entgegengesetzten Richtungen im gleichen Winkel zur Vertikalen geneigten und an ihren benachbarten Längsrändern miteinander verbundenen Lamellen, die Strömungskanäle begrenzen (DE 38 24 295 C2). Sollen sinkfähige bzw. sink- und schwimmfähige Stoffe aus der Flüssigkeit abgeschieden werden, dann werden die Lamellenplatten so angeordnet, daß die einzelnen Lamellen in einem Winkel von 60 Grad zur Vertikalen geneigt sind. Die sich anlagernden sinkfähigen Partikel können so auf den Lamellen nach unten gleiten, um über die der Strömung zugewandten Längsränder der Lamellen nach unten auf den Boden des Behälters bzw. in einen besonderen Sammelbehälter zu sinken. Zu leichten Tröpfchen dispergierte Substanzen können sich an den Unterseiten der Lamellen anlagern, wo sie eine dünne Schicht bilden, die infolge des natürlichen Auftriebs nach oben steigt, um sich an den Längsrändern der Platten in größeren Tropfen abzulösen, die dann ihrerseits in den Stauraum aufsteigen. Plattenabscheider dieser Art funktionieren nur bei sehr geringen Strömungsgeschwindigkeiten zufriedenstellend.

Neben derartigen Plattenabscheidern gibt es auch Abscheider mit Koaleszenzbarrieren aus zu ein oder mehreren vertikalen Wänden zusammengefaßten Matten aus faserigem Material (DE-AS 11 69 895). An den Fasern können sich sehr kleine Tröpfchen beim Vorbeistreichen anlagern und mit anderen Tröpfchen koaleszieren, d.h. sich zu größeren Tropfen zusammenschließen. An den Fasern mit Durchmessern von 2 bis 50 mym werden auch kleinere Tröpfchen eingefangen als zum Beispiel bei Plattenabscheidern, aber nur dann, wenn die Flüssigkeit eine gewisse Strömung hat. Die Tröpfchen umschließen zunächst die Fasern und bilden dann an der der Strömung abgewandten Seite einen Flüssigkeitssack, der zu einem größeren Tropfen heranwächst, sich ablöst und nach oben aufsteigt.

Koaleszenzbarrieren aus Matten haben die nachteilige Eigenschaft, neben der Koaleszenzwirkung für leichte Tröpfchen als Filter für sinkfähige Feststoffe zu wirken. Da die zu klärenden Flüssigkeiten in der Regel nicht nur zu Tröpfchen dispergierte Leichtflüssigkeiten, sondern oft auch Schmutzteilchen als Schwebstoffe enthalten, können sich die Matten infolge der Filterwirkung mit der Zeit zusetzen. Dies hat zur Folge, daß sich bei Wartungsarbeiten, zu denen auch die Reinigung der Koaleszenzmatten nach Abpumpen der Flüssigkeit gehört, Schwebstoffe und Leichtflüssigkeit in den Matten halten, die dadurch dann oft in sich zusammenbrechen und nur noch als Sondermüll entsorgt werden können.

Schließlich ist es auch schon bekannt, Abscheideelemente aus undurchlässigem Material und solche aus durchlässigem Material nebeneinander zu verwenden (US-A 3 957 656). Bei bekannten Abscheidern dieser Art ist einer Koaleszenzbarriere aus Filtermatten ein Stapel aus im wesentlichen horizontal orientierten Lamellenplatten vorgeschaltet, die jeweils in dichtem Abstand voneinander und so zueinander angeordnet sind, daß sich der zwischen den Platten gebildete Weg für die zu behandelnde Flüssigkeit abwechselnd verbreitert und verschmälert. Dadurch soll den in der laminar strömenden Flüssigkeit schwebenden Tröpfchen der dispergierten Phase Gelegenheit gegeben werden, sich zu größeren Tropfen zusammenzuschließen. Wenn die Lamellenplatten wellenförmig zueinander angeordnet sind, können in den Wellenbergen auch Durchbrechungen angeordnet sein, um Leichtflüssigkeitstropfen aufsteigen zu lassen.

Der Erfindung liegt die Aufgabe zugrunde, eine Vorrichtung der eingangs angegebenen Art hinsichtlich der gleichzeitigen Abscheidung von festen und flüssigen dispergierten Anteilen aus einer Flüssigkeit unabhängig von der hydraulischen Belastung des von der Flüssigkeit durchflossenen Querschnitts zu optimieren.

Zur Lösung dieser Aufgabe dienen erfindungsgemäß die im kennzeichnenden Teil des Patentanspruchs 1 angegebenen Merkmale, wenn sie zusammen mit den im Oberbegriff des Anspruchs definierten Merkmalen genommen werden.

Vorteilhafte Weiterbildungen ergeben sich aus den Unteransprüchen.

Die Optimierung der Abscheidefunktion der erfindungsgemäßen Barriere ergibt sich aus der sinnvollen Kombination von durchlässigen und undurchlässigen Abscheideelementen. Da Plattenabscheider bereits bei sehr kleinen endlichen Geschwindigkeiten und in einem anderen Tropfengrößenbereich mit hohem Wirkungsgrad arbeiten als Mattenabscheider, die eine gewisse Mindestgeschwindigkeit der Flüssigkeit benötigen, ergibt sich der Vorteil der Unabhängigkeit der Abscheidefunktion von der hydraulischen Belastung in einem weiten Bereich. Dabei lassen die Winkelneigung der undurchlässigen Abscheideelemente und die Anordnung und Gestaltung der Abtropfkanten relativ große Tropfen entstehen, die schnell zur Oberfläche der Flüssigkeit aufsteigen. Die geneigte bis horizontale Anordnung der durchlässigen Abscheideelemente ermöglicht eine Ausrichtung des Geschwindigkeitsvektors der durch diese hindurchtretenden Flüssigkeit mit der Auftriebskraft der Tropfen und fördert eine Abscheidung auf kürzestem Wege, da die Tropfen gewissermaßen zwangsläufig in die oberen Regionen der Flüssigkeit geführt werden. Schließlich gelingt durch entsprechende Wahl der Anstellwinkel der undurchlässigen und der durchlässigen Abscheideelemente eine Führung des Flüssigkeitsstromes derart, daß im Ablaufbereich die kontinuierliche Phase mit dem niedrigsten Anteil an dispergierter Phase abgezogen werden kann.

Zur Spaltung von Emulsionen mit extrem langen Standzeiten ist es auch möglich, in einer Vorstufe die Emulsion mit organischen Spaltprodukten anzuspalten, um die danach in einer erfindungsgemäßen Vorrichtung erfolgende mechanische Trennung effektiver zu gestalten.

Die Erfindung wird nachstehend anhand der Zeichnung näher erläutert. Es zeigt
- Fig. 1: einen Längsschnitt durch eine Abscheidevorrichtung gemäß der Erfindung und
- Fig. 2: in einem vergrößerten Teilquerschnitt durch eine Barriere gemäß der Erfindung die Abscheidefunktion.

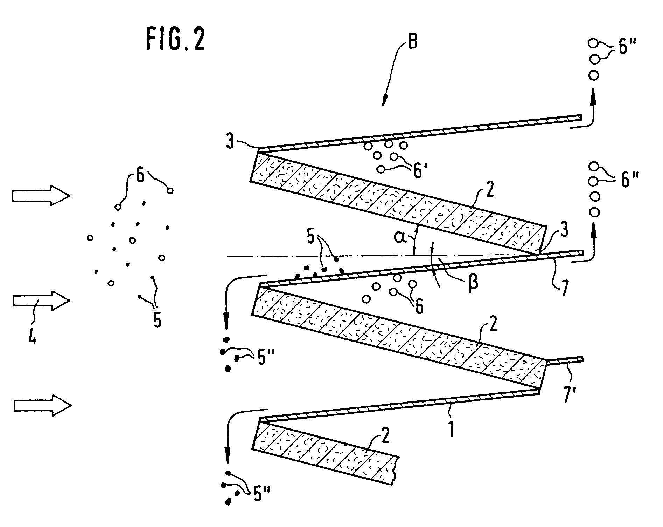

Das Prinzip der erfindungsgemäßen Barriere kann anhand der Fig. 2 erläutert werden, die einen schematischen Querschnitt durch eine gemäß der Erfindung ausgebildete Barriere B zeigt. Diese Barriere B besteht aus undurchlässigen Abscheideelementen, nämlich Koaleszenzplatten 1 aus Metall oder Kunststoff, und durchlässigen Abscheideelementen, nämlich Koaleszenzmatten 2 aus Fasermaterial, die jeweils eben ausgebildet sind und abwechselnd in entgegengesetzten Richtungen zur Horizontalen geneigt verlaufen. An ihren benachbarten Längsrändern 3 sind die Abscheideelemente 1 und 2 miteinander verbunden. Die Matten 2 sind unter einem Neigungswinkel Alpha von 0 bis 45 Grad zur Horizontalen nach oben und die Platten 1 unter einem Neigungswinkel Beta ebenfalls zwischen 0 und 60 Grad zur Horizontalen nach unten gegen die Strömungsrichtung geneigt, die durch die Pfeile 4 angedeutet ist.

Die mit dem Flüssigkeitsstrom des dispersen Systems mit dem Geschwindigkeitsvektor 4 ankommenden sinkfähigen Feststoffpartikel 5 können beim Eintreten in die Barriere B infolge einer Verringerung der Fließgeschwindigkeit absinken; sie gelangen so auf die Oberfläche der geneigten Platten 1, von der sie infolge der Schwerkraft abgleiten (5') und über deren Vorderkante zu Boden sinken (5''). Die in der Flüssigkeit schwebenden Tröpfchen 6 koaleszieren beim Durchströmen der Matten 3 zu größeren Tropfen 6' . Diese bilden an der Unterseite der Platten 1 einen Film, der sich infolge der Auftriebskräfte entlang der schrägen Fläche nach oben bewegt und sich an der Abtropfkante 7 in Form von Lamellen und großen Tropfen 6'' ablöst.

Die horizontale bis schräg geneigte Anordnung der Matten 2 in Verbindung mit deren Durchströmung von unten nach oben hat einerseits den Vorteil, daß die sinkfähigen Feststoffpartikel 5 Gelegenheit erhalten, vor dem Eintritt in die eigentliche Barriere B zu Boden zu sinken, so daß eine Belastung der Matten 2 durch die sonst beobachtete Filterwirkung vermieden wird. Die Koaleszenz der Tröpfchen 6 innerhalb der Matten 2 wird wesentlich dadurch verbessert, daß der Geschwindigkeitsvektor der Flüssigkeit und die Auftriebskraft der Tropfen im wesentlichen in gleicher Richtung wirken. Dadurch wird eine ausgezeichnete Abscheidewirkung bei wesentlich vermindertem Wartungsaufwand erreicht.

Im Rahmen der Erfindung können sowohl für die Platten 1, als auch für die Matten 2 je nach Trennaufgabe und Stoffsystem die bezüglich ihrer Benetzungsfähigkeit unterschiedlichsten Materialien eingesetzt werden. Auch kann durch entsprechende Wahl der Winkelneigung der Platten 1 und/oder Matten 2 sowie Gestaltung der Abtropfkanten die Tropfengröße beeinflußt werden. Während im oberen Teil der Fig. 2 die Abtropfkante 7 gewissermaßen in Fortsetzung der Platten 1 bezüglich der Eckausbildung 3 "unten" angeordnet ist, können die Abtropfkanten 7', wie im unteren Teil angedeutet, auch "oben" liegen.

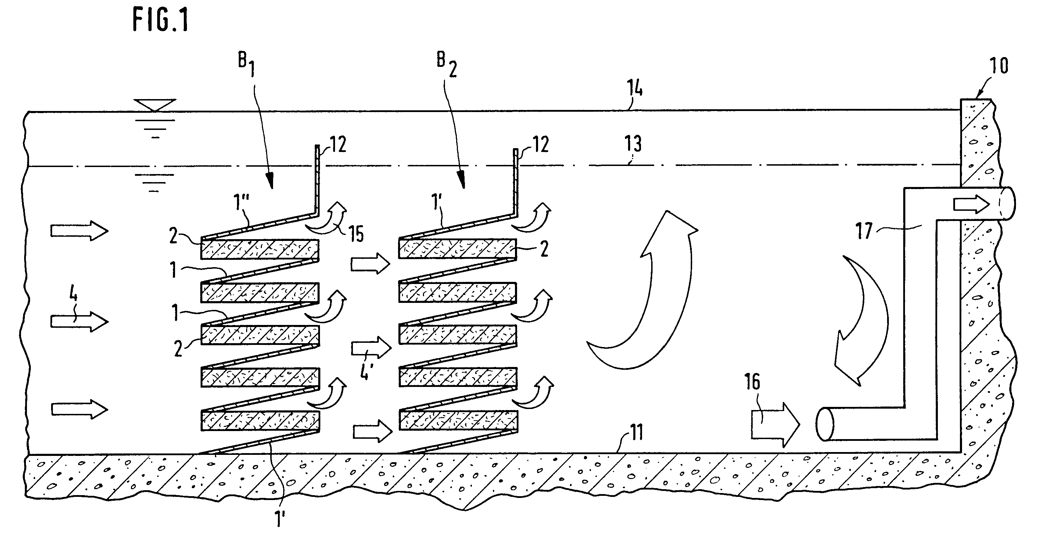

In Fig. 1 ist ein Längsschnitt für eine Abscheidevorrichtung dargestellt, in der zwei Barrieren B₁ und B₂ hintereinander angeordnet sind. Die beiden Barrieren B₁ und B₂ sind in einem Behälter 10, z.B. aus Beton, in aufrechter Lage so eingesetzt, daß der Durchflußquerschnitt für die zu klärende Flüssigkeit abgeschlossen ist. Die Platten 1 und Matten 2 sind im dargestellten Ausführungsbeispiel so angeordnet, daß die Matten 2 horizontal verlaufen (Neigungswinkel Alpha = 0), während die Platten 1 unter dem Winkel Beta zur Horizontalen nach unten geneigt sind. Die jeweils unterste Platte 1' schließt an die Behältersohle 11 an, während die oberste Platte 1'' in eine vertikale Trennwand 12 übergeht, die bis über den Spiegel 13 der kontinuierlichen Phase hinausreicht. Die abgeschiedene Tropfenflüssigkeit 14 schwimmt auf der kontinuierlichen Phase, von wo sie in geeigneter Weise abgezogen werden kann.

Die durch Pfeile 4 symbolisierte Strömung der zu klärenden Flüssigkeit bewirkt beim Eintreten in die erste Barriere B₁ die oben beschriebene Abscheidung der Feststoffpartikel und Tröpfchen; das Aufsteigen der in den Matten 2 vergrößerten Tropfen ist durch Pfeile 15 symbolisiert. Erfahrungsgemäß gelingt mit dem erfindungsgemäßen System bereits ein Abscheidegrad von 95 % bis zu 99,9 %. Wird ein höherer Abscheidegrad gewünscht, dann gelangt die verbliebene Flüssigkeit in Richtung der Pfeile 4' in die zweite Barriere B₂, in der sich der gleiche Abscheidevorgang wiederholt. Da durch die aufwärts gerichtete Durchströmung der Barrieren B₁ und B₂ die Abscheidung vor allem der Tröpfchen optimiert wird, kann im Ablaufbereich in der Nähe der Behältersohle 11 die kontinuierliche Phase mit dem niedrigsten Anteil an Tropfenphase in Richtung des Pfeils 16 durch ein Ablaufrohr 17 abgezogen werden.

## Patentansprüche

1. Vorrichtung zum Trennen von dispersen Flüssig-Flüssig- und Flüssig-Fest-Stoffsystemen mit mindestens einer von der Flüssigkeit durchströmten Barriere (B) aus abwechselnd in entgegengesetzten Richtungen zur Horizontalen geneigten und an ihren benachbarten Längsrändern miteinander verbundenen Abscheideelementen, dadurch gekennzeichnet, daß die Barriere (B) abwechselnd aus durchlässigen Abscheideelementen (2) und undurchlässigen Abscheideelementen (1) besteht, wobei die durchlässigen Abscheideelemente (2) unter einem Winkel Alpha von 0 bis 45 Grad gegenüber der Horizontalen nach oben und die undurchlässigen Abscheideelemente (1) unter einem Winkel Beta von 0 bis 60 Grad gegenüber der Horizontalen nach unten geneigt angeordnet sind, so daß durch die geneigte bis horizontale Anordnung der durchlässigen Abscheideelemente (2) eine Ausrichtung des Geschwindigkeitsvektors der durch diese hindurchtretenden Flüssigkeit mit der Auftriebskraft ermöglicht und eine Abscheidung auf kürzestem Wege erreicht wird.

2. Vorrichtung nach Anspruch 1, dadurch gekennzeichnet, daß die undurchlässigen Abscheideelemente (1) aus Platten aus Metall oder Kunststoff bestehen.

3. Vorrichtung nach Anspruch 1 oder 2, dadurch gekennzeichnet, daß die durchlässigen Abscheideelemente (2) aus Matten aus Faserstoffen gebildet sind.

4. Vorrichtung nach einem der Ansprüche 1 bis 3, dadurch gekennzeichnet, daß an den der Flüssigkeitsströmung abgewandten Längsrändern der Abscheideelemente (1 bzw. 2) Abtropfkanten (7) vorgesehen sind.

## Claims

1. An apparatus for separating disperse liquid-liquid and liquid-solid material systems with at least one barrier (B) through which the liquid flows and which comprises separation elements which are alternately inclined in opposite directions to the horizontal and which are connected to one another at their adjacent longitudinal edges, characterised in that the barrier (B) alternately comprises permeable separation elements (2) and impermeable separation elements (1), wherein the permeable separation elements (2) are arranged upwardly inclined at an angle α of 0 to 45 degrees relative to the horizontal and the impermeable separation elements (1) are arranged downwardly inclined at an angle β of 0 to 60 degrees relative to the horizontal, so that the inclined-to-horizontal arrangement of the permeable separation elements (2) makes it possible for the velocity vector of the liquid flowing therethrough to be aligned with the buoyancy force and a separation is effected along the shortest path.

2. An apparatus according to Claim 1, characterised in that the impermeable separation elements (1) comprise plates of metal or plastics material.

3. An apparatus according to Claim 1 or 2, characterised in that the permeable separation elements (2) are formed from mats of fibrous materials.

4. An apparatus according to any one of Claims 1 to 3, characterised in that drain edges (7) are provided at the longitudinal edges of the separation elements (1 and 2) remote from the liquid flow.

## Revendications

1. Dispositif pour séparer des systèmes dispersés liquide-liquide et liquide-solide, avec au moins une barrière (B) traversée par un écoulement de liquide, composée d'éléments séparateurs, inclinés alternativement, dans des directions opposées par rapport à l'horizontale et reliés ensemble sur leurs bords longitudinaux voisins, caractérisé en ce que la barrière (B) est composée alternativement d'éléments séparateurs (2) perméables et d'éléments séparateurs (1) imperméables, les éléments séparateurs (2) perméables étant disposés sous un angle alpha de 0 à 45 degrés par rapport à l'horizontale, vers le haut, et les éléments séparateurs (1) imperméables étant disposés sous un angle bêta de 0 à 60 degrés par rapport à l'horizontale, vers le bas, de sorte que, du fait de la disposition inclinée de l'oblique jusqu'à l'horizontale des éléments séparateurs perméables (2), une orientation du vecteur de vitesse du liquide les traversant soit possible, à l'aide de la force de poussée, et une séparation étant atteinte sur un trajet minimal.

2. Dispositif selon la revendication 1, caractérisé en ce que les éléments séparateurs (1) imperméables sont réalisés en plaques métalliques ou en matières synthétiques.

3. Dispositif selon la revendication 1 ou 2, caractérisé en ce que les éléments séparateurs (2) perméables sont constitués par des matelas de fibres.

4. Dispositif selon l'une des revendications 1 à 3, caractérisé en ce que des arêtes d'égouttement (7) sont prévues sur les bords longitudinaux, opposés à la direction de l'écoulement du liquide, des éléments séparateurs (1, respectivement 2).
